# EUROPEAN PATENT APPLICATION

(11) **EP 3 952 176 A1**
(43) Date of publication of application: **09.02.2022**
(21) Application number: 19925671.0
(22) Date of filing: 25.04.2019
(51) Int. Cl.: H04L 5/00

(54) **METHOD AND APPARATUS FOR CONFIGURING CHANNEL STATE INFORMATION REFERENCE SIGNALS**

(71) Applicant: Huawei Technologies Co., Ltd., Longgang Shenzhen, Guangdong 518129 (CN)
(72) Inventor: QIAN, Ying, Shenzhen, Guangdong 518129 (CN); CAI, Rui, Shenzhen, Guangdong 518129 (CN); WANG, Yi, Shenzhen, Guangdong 518129 (CN)
(74) Representative: Goddar, Heinz J.
(86) International application number: PCT/CN2019/084371
(87) International publication number: WO 2020/215287

(57) **Abstract**

This application provides a channel state information-reference signal configuration method and an apparatus. The channel state information-reference signal configuration method in this application includes: obtaining a quantity of UEs, where the UE is a UE in transmission mode TM9 or TM10; and when the quantity of UEs is less than or equal to a specified threshold, configuring one CSI-RS pilot for each UE. In this application, impact of CSI-RS pilot configuration on spectral efficiency of a cell can be reduced.

## Description

### TECHNICAL FIELD

This application relates to communication technologies, and in particular, to a channel state information-reference signal configuration method and an apparatus.

### BACKGROUND

In mobility management (Mobility Management, MM), beamforming may be used to simultaneously provide dedicated service beams for a plurality of user equipments (User Equipments, UEs) in transmission mode (Transmission Mode, TM) TM9 or TM10. The UE may measure channel state information (Channel State Information, CSI) based on a channel state information-reference signal (Channel State Information-Reference Signal, CSI-RS) pilot configured by a base station and feed back the CSI.

Usually, a set of CSI-RS pilots are mapped to a fixed beam direction. When the UE moves, the beam direction is switched by switching the CSI-RS pilots. However, as a quantity of antennas increases, a quantity of beams in a cell and a quantity of required CSI-RS pilots are increased, and more time-frequency resources are occupied when a larger quantity of CSI-RS pilots are configured, resulting in impact on spectral efficiency of the cell.

### SUMMARY

This application provides a channel state information-reference signal configuration method and an apparatus, to reduce impact of CSI-RS pilot configuration on spectral efficiency of a cell.

According to a first aspect, this application provides a channel state information-reference signal configuration method. The method includes: obtaining a quantity of first user equipments UEs, where the UE is a UE in transmission mode TM9 or TM10; and when the quantity of UEs is less than or equal to a specified threshold, configuring one channel state information-reference signal CSI-RS pilot for each UE.

In this embodiment, one CSI-RS pilot is configured for each UE. When there is a relatively small quantity of UEs, time-frequency resources occupied by the CSI-RS pilots can be reduced, thereby reducing impact of CSI-RS pilot configuration on spectral efficiency of a cell.

In a possible implementation, before the configuring one CSI-RS pilot for each UE, the method further includes: configuring a CSI-RS pilot period based on the quantity of UEs.

In a possible implementation, after the obtaining a quantity of UEs, the method further includes: when the quantity of UEs is greater than the specified threshold, configuring one CSI-RS pilot for each beam in a cell.

According to a second aspect, this application provides a communication apparatus. The apparatus includes: an obtaining module, configured to obtain a quantity of first user equipments UEs, where the UE is a UE in transmission mode TM9 or TM10; and a configuration module, configured to: when the quantity of UEs is less than or equal to a specified threshold, configure one channel state information-reference signal CSI-RS pilot for each UE.

In a possible implementation, the configuration module is further configured to configure a CSI-RS pilot period based on the quantity of UEs.

In a possible implementation, the configuration module is further configured to: when the quantity of UEs is greater than the specified threshold, configure one CSI-RS pilot for each beam in a cell.

According to a third aspect, this application provides a network device. The network device includes:
one or more processors; and
a memory, configured to store one or more programs, where
when the one or more programs are executed by the one or more processors, the one or more processors are enabled to implement the method according to any one of the first aspect or the possible implementations of the first aspect.

According to a fourth aspect, this application provides a computer-readable storage medium. The computer-readable storage medium stores instructions; and when the instructions are run on a computer, the instructions are used to perform the method according to any one of the first aspect or the possible implementations of the first aspect.

According to a fifth aspect, this application provides a computer program. When the computer program is executed by a computer, the computer program is used to perform the method according to any one of the first aspect or the possible implementations of the first aspect.

### BRIEF DESCRIPTION OF DRAWINGS

FIG. 1 is a flowchart of an embodiment of a channel state information-reference signal configuration method according to this application;
FIG. 2 is a schematic block diagram of a communication apparatus 200 according to this application; and
FIG. 3 is a schematic structural diagram of a network device 300 according to this application.

### DESCRIPTION OF EMBODIMENTS

To make the objectives, technical solutions, and advantages of this application clearer, the following clearly and completely describes the technical solutions in this application with reference to the accompanying drawings in this application. Clearly, the described embodiments are merely a part rather than all of the embodiments of this application. All other embodiments obtained by a person of ordinary skill in the art based on the embodiments of this application without creative efforts shall fall within the protection scope of this application.

In the embodiments, claims, and the accompanying drawings of this specification in this application, the terms "first", "second", and the like are only used for a purpose of description, and cannot be understood as indicating or implying relative importance or a sequence. In addition, the terms "include", "have", and any other variant thereof are intended to cover a non-exclusive inclusion, for example, including a series of steps or units. A method, system, product, or device does not need to be limited to those explicitly listed steps or units, but may include other steps or units that are not explicitly listed or that are inherent to the process, method, product, or device.

It should be understood that, in this application, "at least one (item)" means one or more, and "a plurality of" means two or more. The term "and/or" is used to describe an association relationship between associated objects, and indicates that three relationships may exist. For example, "A and/or B" may represent the following three cases: Only A exists, only B exists, and both A and B exist, where A and B may be singular or plural. The character "/" usually represents an "or" relationship between the associated objects. "At least one of the following items (pieces)" or a similar expression thereof indicates any combination of these items, including a single item (piece) or any combination of a plurality of items (pieces). For example, at least one (piece) of a, b, or c may indicate a, b, c, "a and b", "a and c", "b and c", or "a, b, and c", where a, b, and c may be singular or plural.

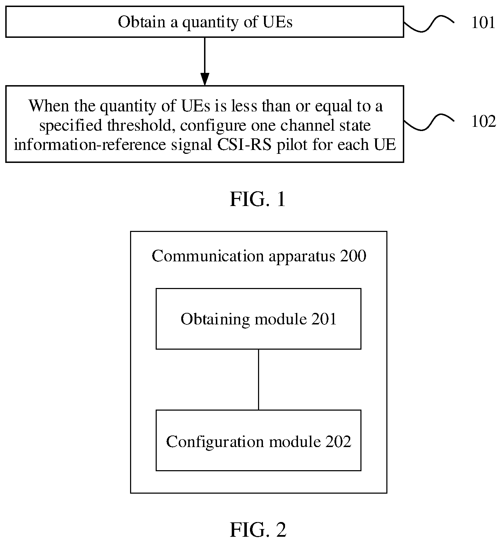

FIG. 1 is a flowchart of an embodiment of a channel state information-reference signal configuration method according to this application. As shown in FIG. 1, the method in this embodiment may include the following steps.

Step 101: Obtain a quantity of UEs.

The UE is a UE in TM9 or TM10. In this application, when a network device (for example, a base station in MM) configures a downlink transmit beam for the UE, reference needs to be made to the UE in TM9 or TM10. Therefore, a quantity of such UEs needs to be first obtained.

Step 102: When the quantity of UEs is less than or equal to a specified threshold, configure a channel state information-reference signal CSI-RS pilot for each UE.

One subframe usually includes 14 symbols on which a limited quantity of CSI-RS pilots can be configured, and a maximum of 10 CSI-RS pilots can be configured. Therefore, only when there are a relatively small quantity of UEs, the network device can implement a solution of configuring one CSI-RS pilot for each UE. When a UE moves, even if a downlink transmit beam corresponding to the UE is switched, a CSI-RS pilot used by the UE to measure CSI is fixed. That is, a beam direction to which the CSI-RS pilot is mapped changes with a location of the UE. The specified threshold may be set based on cell deployment, a network optimization effect, and a quantity of accessed UEs. For example, the specified threshold is 6. When the quantity of UEs is less than 6, for example, 5, the network device configures one fixed CSI-RS pilot for each UE. A total of five CSI-RS pilots are configured, which is far less than the maximum of 10 CSI-RS pilots that can be configured. Time-frequency resources occupied by the five CSI-RS pilots are greatly reduced, thereby reducing impact on spectral efficiency of a cell.

When configuring the CSI-RS pilots, the network device may further adjust a CSI-RS pilot period based on the quantity of UEs. To be specific, a smaller quantity of UEs indicates a shorter CSI-RS pilot period; or a larger quantity of UEs indicates a longer CSI-RS pilot period. For example, the quantity of UEs is 5. According to a protocol, a shortest CSI-RS pilot period may be configured to 5 ms. The network device may configure CSI-RS pilots for the five UEs in the 5 ms period. To be specific, the network device may separately configure a CSI-RS pilot in one subframe in the 5 ms period for the five UEs, or may configure different CSI-RS pilots in a same subframe or several subframes in the 5 ms period for the five UEs. In this way, the UEs can measure CSI on downlink transmit beams corresponding to the UEs and feed back the CSI. Alternatively, the quantity of UEs is 60. The CSI-RS pilot period may be configured to 10 ms. The network device may separately configure CSI-RS pilots in a plurality of subframes in the 10 ms period for the 60 UEs. In this way, a relatively small quantity of time-frequency resources are occupied by CSI-RS pilots in each subframe, and a relatively large quantity of UEs are supported.

Optionally, in two cases in the foregoing example, because each subframe still includes a time-frequency resource that can be configured as a CSI-RS pilot, the network device may configure, as a UE in TM9 or TM10, one of the accessed UEs that is not in TM9 or TM10 and that requests to transmit a relatively large amount of data, and then configure a CSI-RS pilot for the UE by using the foregoing method.

In this embodiment, one CSI-RS pilot is configured for each UE. When there is a relatively small quantity of UEs, time-frequency resources occupied by the CSI-RS pilots can be reduced, thereby reducing impact of CSI-RS pilot configuration on the spectral efficiency of the cell.

Based on the foregoing technical solution, the network device may further configure one CSI-RS pilot for each beam in the cell. To be specific, if there are a large quantity of UEs, configuring one CSI-RS pilot for each UE cannot meet a communication requirement of a system. In this case, the network device may configure one CSI-RS pilot for each beam in the cell according to a conventional technology. Details are not described herein again.

FIG. 2 is a schematic block diagram of a communication apparatus 200 according to this application. The communication apparatus 200 includes an obtaining module 201 and a configuration module 202.

In an embodiment, the communication apparatus 200 has a function of configuring a CSI-RS pilot for a UE by the network device in the method embodiment. For example, the communication apparatus 200 may completely correspond to the network device in the embodiment of FIG. 1. In this case, units of the communication apparatus 200 are separately configured to perform the following operations and/or processing.

The obtaining module 201 is configured to obtain a quantity of first user equipments UEs, where the UE is a UE in transmission mode TM9 or TM10.

The configuration module 202 is configured to: when the quantity of UEs is less than or equal to a specified threshold, configure one channel state information-reference signal CSI-RS pilot for each UE.

In a possible implementation, the configuration module 202 is further configured to configure a CSI-RS pilot period based on the quantity of UEs.

In a possible implementation, the configuration module 202 is further configured to: when the quantity of UEs is greater than the specified threshold, configure one CSI-RS pilot for each beam in a cell.

Optionally, the communication apparatus 200 may further have another function in the method embodiment. For similar descriptions, refer to descriptions in the foregoing method embodiment. To avoid repetition, details are not described herein again.

Optionally, the obtaining module 201 and the configuration module 202 may be processors.

Optionally, the obtaining module 201 and the configuration module 202 may be processing apparatuses, and some or all functions of the processing apparatus may be implemented by using software.

In a possible implementation, some or all functions of the processing apparatus may be implemented by software. In this case, the processing apparatus may include a memory and a processor. The memory is configured to store a computer program, and the processor reads and executes the computer program stored in the memory, to perform steps implemented internally by the network device in the method embodiment.

Optionally, in a possible implementation, the processing apparatus includes a processor. A memory configured to store a computer program is located outside the processing apparatus, and the processor is connected to the memory by using a circuit/wire, to read and execute the computer program stored in the memory.

In a possible implementation, all functions of the processing apparatus may be implemented by hardware. In this case, the processing apparatus may include an input interface circuit, a logic circuit, and an output interface circuit.

In another embodiment, the communication apparatus 200 may be a chip.

This application further provides a computer-readable storage medium. The computer-readable storage medium stores a computer program; and when the computer program is executed by a computer, the computer is enabled to perform steps and/or processing performed by the network device in the foregoing method embodiment.

This application further provides a computer program product. The computer program product includes computer program code. When the computer program code is run on a computer, the computer is enabled to perform steps and/or processing performed by the network device in the foregoing method embodiment.

This application further provides a chip. The chip includes a processor. A memory configured to store a computer program is disposed independent of the chip. The processor is configured to execute the computer program stored in the memory, to perform steps and/or processing performed by the network device in the method embodiment.

Further, the chip may further include a memory and a communication interface. The communication interface may be an input/output interface, a pin, an input/output circuit, or the like.

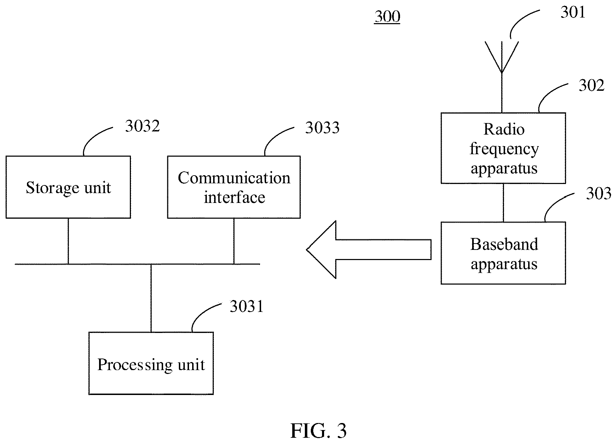

FIG. 3 is a schematic structural diagram of a network device 300 according to this application. The network device 300 may correspond to a satellite base station in the method embodiment. As shown in FIG. 3, the network device 300 includes an antenna 301, a radio frequency apparatus 302, and a baseband apparatus 303. The antenna 301 is connected to the radio frequency apparatus 302. In an uplink direction, the radio frequency apparatus 302 receives, by using the antenna 301, a signal from a terminal device, and sends the received signal to the baseband apparatus 303 for processing. In a downlink direction, the baseband apparatus 303 generates a signal that needs to be sent to the terminal device, and sends the generated signal to the radio frequency apparatus 302. The radio frequency apparatus 302 transmits the signal by using the antenna 301.

The baseband apparatus 303 may include one or more processing units 3031. The processing unit 3031 may be specifically a processor.

In addition, the baseband apparatus 303 may further include one or more storage units 3032 and one or more communication interfaces 3033. The storage unit 3032 is configured to store a computer program and/or data. The communication interface 3033 is configured to exchange information with the radio frequency apparatus 302. The storage unit 3032 may be specifically a memory, and the communication interface 3033 may be an input/output interface or a transceiver circuit.

Optionally, the storage unit 3032 may be a storage unit located on a same chip as the processing unit 3031, namely, an on-chip storage unit, or may be a storage unit located on a different chip from the processing unit 3031, namely, an off-chip storage unit. This is not limited in this application.

In FIG. 3, the baseband apparatus 303 may perform operations and/or processing performed by the obtaining module 201 and the configuration module 202 in the apparatus embodiments (for example, FIG. 2).

In an embodiment, the obtaining module 201 and the configuration module 202 of the communication apparatus 200 shown in FIG. 2 may be the baseband apparatus 303 shown in FIG. 3.

The processor mentioned in the foregoing embodiments may be an integrated circuit chip, and has a signal processing capability. In an implementation process, the steps in the foregoing method embodiment may be completed by using a hardware integrated logic circuit in the processor or instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like. Steps in the method disclosed in the embodiments of this application may be directly performed and accomplished by a hardware coding processor, or may be performed and accomplished by a combination of hardware in the coding processor and a software module. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing method in combination with the hardware of the processor.

The memory in the foregoing embodiments may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through examples but not limitative descriptions, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification includes but is not limited to these memories and any memory of another proper type.

A person of ordinary skill in the art may be aware that units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, apparatus, and unit, refer to corresponding processes in the foregoing method embodiment. Details are not described herein again.

In the several embodiments provided in this application, it should be understood that the disclosed system, apparatus, and method may be implemented in another manner. For example, the described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate. Parts displayed as units may or may not be physical units, to be specific, may be located in one position, or may be distributed on a plurality of network units. Some or all of the units may be selected based on an actual requirement to achieve the objectives of the solutions of the embodiments.

In addition, functional units in the embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium and includes several instructions for instructing a computer device (which is a personal computer, a server, a network device, or the like) to perform all or some of the steps of the method described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A channel state information-reference signal configuration method, comprising:
obtaining a quantity of user equipments UEs, wherein the UE is a UE in transmission mode TM9 or TM10; and
when the quantity of UEs is less than or equal to a specified threshold, configuring one channel state information-reference signal CSI-RS pilot for each UE.

2. The method according to claim 1, wherein before the configuring one CSI-RS pilot for each UE, the method further comprises:
configuring a CSI-RS pilot period based on the quantity of UEs.

3. The method according to claim 1 or 2, wherein after the obtaining a quantity of UEs, the method further comprises:
when the quantity of UEs is greater than the specified threshold, configuring one CSI-RS pilot for each beam in a cell.

4. A communication apparatus, comprising:
an obtaining module, configured to obtain a quantity of user equipments UEs, wherein the UE is a UE in transmission mode TM9 or TM10; and
a configuration module, configured to: when the quantity of UEs is less than or equal to a specified threshold, configure one channel state information-reference signal CSI-RS pilot for each UE.

5. The apparatus according to claim 4, wherein the configuration module is further configured to configure a CSI-RS pilot period based on the quantity of UEs.

6. The apparatus according to claim 4 or 5, wherein the configuration module is further configured to: when the quantity of UEs is greater than the specified threshold, configure one CSI-RS pilot for each beam in a cell.

7. A network device, comprising:
one or more processors; and
a memory, configured to store one or more programs, wherein
when the one or more programs are executed by the one or more processors, the one or more processors are enabled to implement the method according to any one of claims 1 to 3.

8. A computer-readable storage medium, wherein the computer-readable storage medium stores instructions; and when the instructions are run on a computer, the instructions are used to perform the method according to any one of claims 1 to 3.

9. A computer program, wherein when the computer program is executed by a computer, the computer program is used to perform the method according to any one of claims 1 to 3.
